# EUROPÄISCHE PATENTANMELDUNG

(11) **EP 0 570 665 A1**
(43) Veröffentlichungstag der Anmeldung: **24.11.1993**
(21) Anmeldenummer: 93101684.4
(22) Anmeldetag: 04.02.1993
(51) Int. Cl.: A61C 19/00, G02B 6/38

(54) **Schnellkupplung für den Lichtleiter eines Bestrahlungsgerätes**

(30) Priorität: 16.05.1992 DE 4216254
(71) Anmelder: HERAEUS KULZER GMBH, 63450 Hanau (DE)
(72) Erfinder: Griegereit, Helmut, Laguna Niguel, CA 92672 (US); Oppawsky, Steffen, W-6380 Bad Homburg (DE); Schödel, Dieter, Dr., W-6200 Wiesbaden (DE)

(57) **Zusammenfassung**

Die Erfindung betrifft einen Lichtleiter für ein Bestrahlungsgerät für medizinische und/oder zahntechnische Anwendungen mit einem flexiblen Mittelstück (1), an dessen einem Ende ein Anschlußstück und an dessen anderem Ende ein Griffstück (3) mit einem Lichtaustrittsteil angeordnet ist. Um einen Lichtleiter zu schaffen, dessen Griffstück auf einfache Weise mehrfach montiert und demontiert werden kann und der dabei in jeder Lage einen konstanten Strahlungsaustritt ermöglicht, ist an dem griffseitigen Ende des Mittelstücks eine Verbindungshülse (2) fest aufgesetzt, die mit einer Ringnut (8) des Griffstücks zusammenwirkt, wobei die Verbindungshülse und die Ringnut (8) über kugelförmige Rastelemente (6) lösbar ineinandergesteckt in Eingriff stehen und wobei die Verbindungshülse und die Verbindungsteile über die Rastelemente hinsichtlich ihrer Achsen zentriert sind.

## Beschreibung

Die Erfindung betrifft einen Lichtleiter für ein Bestrahlungsgerät für medizinische und/oder zahntechnische Anwendungen mit einem flexiblen Mittelstück, an dessen einem Ende ein Anschlußstück und an dessen anderem Ende ein Griffstück mit einem Lichtaustrittsteil angeordnet ist.

Ein derartiger Lichtleiter ist aus der DE 30 09 171 bekannt. Der hier beschriebene Lichtleiter weist ein flexibles Mittelstück auf, welches an seinem einen Ende mittels eines Anschlußstückes an einer Lichtquelle angeordnet ist. An dem anderen Ende des flexiblen Mittelstücks ist eine Verbindungshülse angeordnet, die als Griffstück dient und in die ein Lichtaustrittsteil hineingesteckt und fixiert ist. Der hier beschriebene Lichtleiter ist daher relativ einfach zu montieren. Die tägliche Arbeit mit derartigen Geräten zeigt jedoch zunehmend, daß es notwendig ist, derartige Geräte, insbesondere das Griffstück und das Lichtaustrittsteil im Rahmen ihrer täglichen Anwendung in Labors oder Behandlungsräumen im Anschluß an ihre Benutzung wirkungsvoll reinigen zu können. Dies ist bei gleichzeitig zu gewährleistender exakter Arbeitsweise mit dem beschriebenen Lichtleiter nicht möglich, da das Griffstück nicht ohne weiteres demontiert werden kann. Eine weitere derartige Anordnung ist aus dem Firmenprospekt "Translux-Hochleistungs-Handlichtgeräte für Praxis und Labor" (151188/D 185 SK dt.) der Kulzer GmbH bekannt. Hier weist der Lichtleiter ein flexibles Mittelstück auf, an dessen einem Ende ein Anschlußstück angeordnet ist und das an seinem anderen Ende ein Griffstück mit einem abgewinkelten Lichtaustrittsteil aufweist. Das Griffstück ist ebenfalls nicht abnehmbar.

Aufgabe der vorliegenden Erfindung ist es daher, einen Lichtleiter zu schaffen, dessen Grifftstück auf einfache Weise mehrfach montiert und demontiert werden kann und der dabei in jeder Lage einen konstanten Strahlungsaustritt ermöglicht.

Erfindungsgemäß wird die Aufgabe für einen Lichtleiter gemäß dem Oberbegriff des Anspruchs 1 dadurch gelöst, daß an dem griffseitigen Ende des Mittelstücks eine Verbindungshülse fest aufgesetzt ist, die mit Verbindungsteilen des Griffstücks zusammenwirkt, wobei die Verbindungshülse und die Verbindungsteile über Rastelemente lösbar ineinander gesteckt in Eingriff stehen und wobei die Verbindungshülse und die Verbindungsteile über die Rastelemente hinsichtlich ihrer Achsen zentriert sind. Ein derartiger Lichtleiter ist in Labors und Behandlungsräumen jederzeit leicht montierbar oder demontierbar, so daß das Griffstück mit dem Lichtaustrittsteil, welches beispielsweise bei Bestrahlungen im Mund von Patienten Verschmutzungen ausgesetzt ist, leicht von dem Mittelstück zu entfernen und zu reinigen ist. Gleichzeitig ist durch die Zentrierung der Achsen der einzelnen Lichtleiterteile gewährleistet, daß das Lichtaustrittsteil in jeder Lage die gleichen konstanten Strahlungsverhältnisse aufweist. Dadurch ist die Reproduzierbarkeit von Bestrahlungsvorgängen gewährleistet.

Vorteilhaft für eine optimale Reinigung ist es, daß das Griffstück aus sterilisierbarem Material besteht. Dadurch ist die Möglichkeit gegeben, daß das während des Gebrauchs verunreinigte Griffstück vor jedem Gebrauch keimfrei gemacht werden kann und so auch hohen hygienischen Anforderungen genügt.

Zweckmäßigerweise sind mindestens drei Rastelemente in gleichen Abständen voneinander auf einer die Achse des Lichtleiters koaxial umgebenden Kreisbahn angeordnet. Durch eine solche Anordnung wird eine exakt zentrierte und reproduzierbare Anordnung des Griffstücks gewährleistet, so daß die aus dem Lichtaustrittsteil austretende Lichtstrahlung stets konstant und unabhängig von der Lage des zentrierten Griffstückes ist.

Vorteilhaft ist es, daß die Rastelemente als Kugel ausgebildet sind. Zweckmäßig ist es außerdem, daß die Verbindungshülse radiale Durchbrüche aufweist, in denen jeweils ein Rastelement beweglich angeordnet ist. Dadurch ist die Zentrierung in besonders einfacher Weise realisierbar. Die Rastelemente können jedoch beispielsweise auch in Form von Stiften mit abgerundeten oder auch spitzen Enden ausgebildet sein.

Zweckmäßigerweise ist der Querschnitt der radialen Durchbrüche im Bereich der inneren Oberfläche der Verbindungshülse verjüngt. Durch diese Verjüngung wird verhindert, daß nach Entfernen des Griffstücks die Rastelemente in das Innere der Verbindungshülse hineinfallen und damit eine weitere Montage blockieren können.

Vorteilhaft ist es, daß die radiale Ausdehnung der Durchbrüche geringer ist als die radiale Ausdehnung der Rastelemente und daß die Verbindungshülse im Bereich der Durchbrüche von einem auf der Verbindungshülse verschiebbar angeordneten Verriegelungsring umfaßt ist, der einen in seinem Durchmesser erweiterten inneren Bereich aufweist, in den bei Verschieben des Verriegelungsringes die Rastelemente nach außen aus dem Eingriff mit den Verbindungsteilen des Griffstückes freigegeben werden. Durch diese Anordnung wird gewährleistet, daß die Rastelemente spielfrei mit den Verbindungsteilen des Griffstücks in Eingriff stehen, da der Verriegelungsring eine Kraft In Richtung des Griffstückes auf die Rastelemente ausübt. Es wird auch gewährleistet, daß bei Verschieben des Verriegelungsringes sich die Rastelemente nach außen bewegen können, so daß das Griffstück freigegeben wird und aus der Verbindungshülse herausgezogen werden kann.

Um ein unbeabsichtigtes Verschieben des Verriegelungsringes zu verhindern, ist ein elastisches Spannelement mindestens teilweise zwischen Verriegelungshülse und Verriegelungsring angeordnet, das den Verriegelungsring in seiner Verriegelungsstellung hält, wobei der Verriegelungsring gegen eine Kraft in die Freigabestellung verschiebbar ist. Zweckmäßigerweise ist das Spannelement eine Spiralfeder, die zwischen einem Anschlag der Verbindungshülse und einer Anschlagfläche des Verriegelungsringes angeordnet ist. Der Anschlag der Verbindungshülse kann eine umlaufende Wulst oder beispielsweise auch ein Kragen sein, der in seinem äußeren Bereich in Richtung des Verriegelungsringes abgewinkelt ist, so daß dieser abgewinkelte Bereich einen abgewinkelten, die Verbindungshülse und die Spiralfeder koaxial umfassenden Zylinder bildet. Die Anschlagfläche des Verriegelungsringes kann beispielsweise eine Stirnfläche des Verriegelungsringes oder eine gegenüber der Stirnfläche in Form einer umlaufenden Stufe zurückgesetzte Fläche sein.

Zweckmäßig ist es, daß die Verbindungsteile des Griffstücks durch eine umlaufende Nut gebildet sind. In diese Nut können die Rastelemente eingreifen, wodurch zum einen eine exakte axiale Justierung des Griffstücks gewährleistet ist, und zum anderen ist es durch die umlaufende Nut möglich, daß das Griffstück um seine Längsachse gedreht werden kann. Auf diese Weise kann das Griffstück, das in der Regel ein gekrümmtes Lichtaustrittsteil aufweist, stets in die optimale Behandlungsposition gebracht werden, ohne daß Torsionskräfte in dem flexiblen Mittelstück auftreten.

Zweckmäßig ist es auch, daß das Verbindungsstück mit dem griffseitigen Ende des Mittelstücks verschraubt ist. Dadurch ist zum einen ein fester Sitz, zum anderen aber auch ein einfaches Entfernen des Verbindungsstücks möglich. Denkbar ist jedoch beispielsweise auch ein Ankleben oder Aufschrumpfen. In einem solchen Fall ist das Verbindungsstück jedoch nicht mehr problemlos entfernbar.

Zwischen dem griffseitigen Ende des Mittelstücks und dem Griffstück kann innerhalb der Verbindungshülse ein optisches Filter oder ein anderes optisches Element angeordnet sein, um die Strahlungseigenschaften des austretenden Lichtstrahls, wie beispielsweise die Wellenlänge, verändern zu können.

Nachfolgend wird die Erfindung an einem Ausführungsbeispiel anhand einer Zeichnung näher erläutert. In der Zeichnung zeigt:
- Figur 1: eine schematische Darstellung eines Endes des Lichtleiters mit Verbindungshülse und Griffstück
- Figur 2: eine schematische Darstellung der Kopplung zwischen Griffstück und Mittelstück
- Figur 3: einen Schnitt längs der Linie A-A in Figur 2.

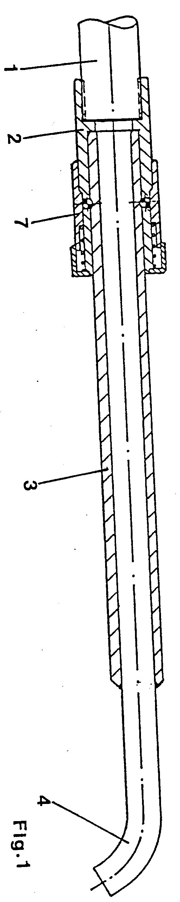

Der Lichtleiter für ein Bestrahlungsgerät für medizinische und/oder zahntechnische Anwendungen kann insbesondere eingesetzt werden, um beispielsweise zahntechnische Kunststoffe im Mund eines Patienten durch Polymerisation auszuhärten. Der Lichtleiter weist ein flexibles Mittelstück 1 auf, an dessen einem Ende ein Anschlußstück für den Anschluß an eine Lichtquelle angeordnet ist. In Figur 1 ist das andere Ende des flexiblen Mittelstücks 1 dargestellt. Auf dieses Ende des Mittelstücks 1 ist eine Verbindungshülse 2 aufgeschraubt, in der das Griffstück 3 mit dem Lichtaustrittsteil 4 lösbar angeordnet ist. Das Griffstück 3 mit dem Lichtaustrittsteil 4 ist aus einem sterilisierbaren Material gebildet, so daß es beispielsweise mit Heißdampf oder Heißluft sterilisiert werden kann.

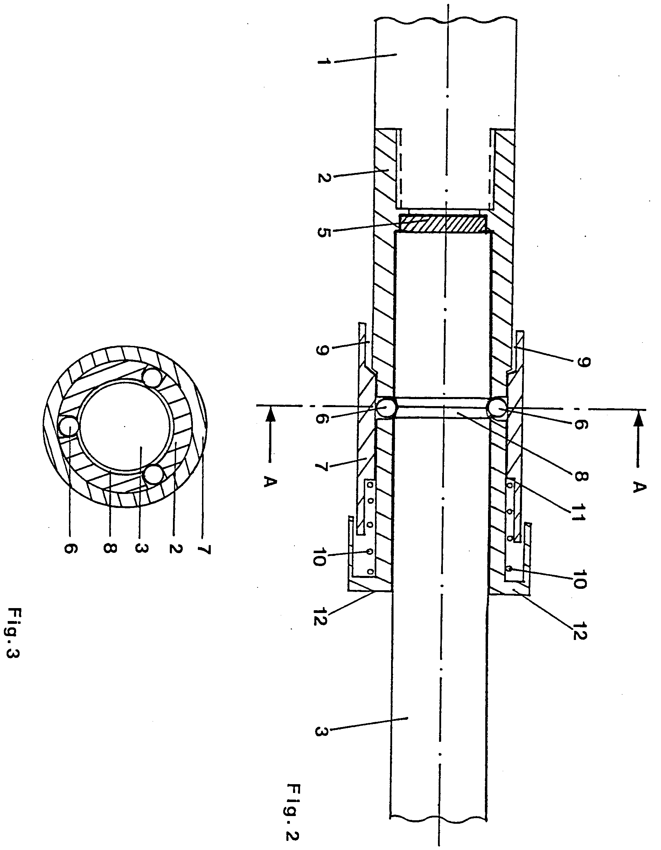

Figur 2 zeigt die Verbindungshülse 2 mit dem aufgeschraubten Ende des Mittelstücks 1 des Lichtleiters und dem eingesetzten Griffstück 3. Zwischen dem Mittelstück 1 und dem Griffstück 3 ist ein optisches Filter 5 angeordnet. In dem griffseitigen Ende der Verbindungshülse 2 sind drei radiale Bohrungen in gleichen Abständen voneinander auf einer Kreisbahn angeordnet. Die Bohrungen sind zu der Inneren Oberfläche der Verbindungshülse 2 hin verjüngt, so daß die Kugeln 6, die als Rastelemente in den Bohrungen angeordnet sind und deren Durchmesser nur unwesentlich kleiner als der Durchmesser der Bohrungen ist, nicht in das Innere der Verbindungshülse 2 hineinfallen können. Da die Länge der Bohrungen etwas geringer ist als ihr Durchmesser, werden die Kugeln 6 von einem auf der Verbindungshülse 2 gleitenden Verriegelungsring 7 in das Innere der Verbindungshülse 2 gedrückt, so daß sie in der Nut 8 des Griffstückes 3 anliegen. Dadurch wird das Griffstück 3 in einer exakt justierten Lage gehalten. Es ist jedoch in der Verbindungshülse 2 drehbar, so daß die Stellung des Lichtaustrittsteils 4 der Lage der zu bestrahlenden Fläche angepaßt werden kann, ohne daß Torsionsspannungen innerhalb des flexiblen Mittelstücks 1 verursacht werden.

Nach Abschluß eines Behandlungsvorganges kann das Griffstück 3 aus der Führungshülse 2 entnommen und vor dem erneuten Einsetzen sterilisiert werden. Zum Entnehmen des Griffstücks 3 aus der Verbindungshülse 2 wird der Verriegelungsring 7 zu dem griffseitigen Ende der Verbindungshülse 2 hin geschoben, bis sich der In seinem Durchmesser erweiterte innere Bereich 9 des Verriegelungsringes 7 über den Kugeln 6 befindet. Diese bewegen sich nunmehr bei einer auf das Griffstück 3 wirkenden Zugkraft nach außen, so daß die Nut 8 freigegeben und das Griffstück 3 aus der Verbindungshülse 2 herausgezogen werden kann. Da die radialen Bohrungen zu der inneren Oberfläche der Verbindungshülse 2 hin verjüngt sind, können die Kugeln 6 nicht in das Innere der Verbindungshülse 2 gleiten, sondern sie bleiben innerhalb der Bohrungen der Verbindungshülse 2.

Wird der Verriegelungsring 7 losgelassen, so bewegt er sich wieder mit seinem dem Durchmesser der Verbindungshülse 2 im Bereich der Bohrungen angepaßten Teil über die Bohrungen, so daß die Kugeln 6 arretiert sind. Die selbständige Bewegung des Verriegelungsringes 7 in die Verriegelungsstellung wird durch eine Spiralfeder 10 verursacht, die zwischen einer im inneren Bereich des Verriegelungsringes 7 gegenüber seiner Stirnfläche zurückgesetzten Fläche 11 in Form einer umlaufenden Stufe und einem am griffseitigen Ende der Führungshülse 2 angeordneten Kragen 12 angeordnet ist. Der Kragen ist in seinem äußeren Bereich in Richtung der Bohrungen hin abgewinkelt und umfaßt koaxial die Spiralfeder 10 und einen Teil der äußeren Oberfläche des Verriegelungsringes 7, so daß die Spiralfeder 10 vor Beschädigung oder Blockierung geschützt ist. Die Spiralfeder 10 verhindert eine selbstätige Freigabe der Kugeln 6, so daß sich das Griffstück 3 nicht unbeabsichtigt aus der Verbindungshülse 2 lösen kann.

Vor dem Einsetzen des Griffstücks 3 in die Verbindungshülse 2 wird der Verriegelungsring 7 entgegen der Federkraft in die Freigabestellung geschoben, so daß die Kugeln 6 in den Bohrungen nach außen gleiten können und das Griffstück 3 in die Verbindungshülse 2 hineingesteckt werden kann. Nach Loslassen des Verriegelungsringes 7 bewegt sich dieser wieder in die Verriegelungsstellung und das Griffstück 3 ist arretiert.

## Patentansprüche

1. Lichtleiter für ein Bestrahlungsgerät für medizinische und/oder zahntechnische Anwendungen mit einem flexiblen Mittelstück, an dessen einem Ende ein Anschlußstück und an dessen anderem Ende ein Griffstück mit einem Lichtaustrittsteil angeordnet ist, dadurch gekennzeichnet, daß an dem griffseitigen Ende des Mittelstücks (1) eine Verbindungshülse (2) fest aufgesetzt ist, die mit Verbindungsteilen (8) des Griffstücks (3) zusammenwirkt, wobei die Verbindungshülse (2) und die Verbindungsteile (8) über Rastelemente (6) lösbar ineinandergesteckt in Eingriff stehen und wobei die Verbindungshülse (2) und die Verbindungsteile (8) über die Rastelemente (6) hinsichtlich ihrer Achsen zentriert sind.

2. Lichtleiter nach Anspruch 1, dadurch gekennzeichnet, daß das Griffstück (3) aus sterilisierbarem Material besteht.

3. Lichtleiter nach Anspruch 1 oder 2, dadurch gekennzeichnet, daß mindestens drei Rastelemente (6) in gleichen Abständen voneinander auf einer die Achse des Lichtleiters koaxial umgehenden Kreisbahn angeordnet sind.

4. Lichtleiter nach einem der Ansprüche 1 bis 3, dadurch gekennzeichnet, daß die Rastelemente (6) als Kugeln ausgebildet sind.

5. Lichtleiter nach einem der Ansprüche 1 bis 4, dadurch gekennzeichnet, daß die Verbindungshülse (2) radiale Durchbrüche aufweist, in denen jeweils ein Rastelement (6) beweglich angeordnet ist.

6. Lichtleiter nach Anspruch 5, dadurch gekennzeichnet, daß der Querschnitt der radialen Durchbrüche im Bereich der inneren Oberfläche der Verbindungshülse (2) verjüngt ist.

7. Lichtleiter nach Anspruch 5 oder 6, dadurch gekennzeichnet, daß die radiale Ausdehnung der Durchbrüche geringer ist als die radiale Ausdehnung der Rastelemente (6) und daß die Verbindungshülse (2) im Bereich der Durchbrüche von einem auf der Verbindungshülse (2) verschiebbar angeordneten Verriegelungsring (7) umfaßt ist, der einen in seinem Durchmesser erweiterten inneren Bereich (9) aufweist, in den beim Verschieben des Verriegelungsringes (7) die Rastelemente (6) nach außen aus dem Eingriff mit den Verbindungsteilen (8) des Griffstückes (3) freigegeben werden.

8. Lichtleiter nach Anspruch 7, dadurch gekennzeichnet, daß ein elastisches Spannelement (10) mindestens teilweise zwischen Verbindungshülse (2) und Verriegelungsring (7) angeordnet ist, das den Verriegelungsring (7) in seiner Verriegelungsstellung hält, wogegen der Verriegelungsring (7) gegen eine Kraft in die Freigabestellung verschiebbar ist.

9. Lichtleiter nach Anspruch 8, dadurch gekennzeichnet, daß das Spannelement (10) eine Spiralfeder ist, die zwischen einem Anschlag der Verbindungshülse (2) und einer Anschlagfläche des Verriegelungsringes (7) angeordnet ist.

10. Lichtleiter nach einem der Ansprüche 5 bis 9, dadurch gekennzeichnet, daß die Verbindungsteile (8) des Griffstückes (2) durch eine umlaufende Nut gebildet sind.

11. Lichtleiter nach einem der Ansprüche 1 bis 10, dadurch gekennzeichnet, daß das Verbindungsstück (2) mit dem griffseitigen Ende des Mittelstücks (1) verschraubt ist.

12. Lichtleiter nach einem der Ansprüche 1 bis 11, dadurch gekennzeichnet, daß zwischen dem griffseitigen Ende des Mittelstücks (1) und dem Griffstück (3) innerhalb der Verbindungshülse (2) ein optisches Filter (5) angeordnet ist.
